# EUROPEAN PATENT APPLICATION

(11) **EP 4 668 376 A1**
(43) Date of publication of application: **24.12.2025**
(21) Application number: 24183656.8
(22) Date of filing: 21.06.2024
(51) Int. Cl.: H01M 8/04007, H01M 8/04014, H01M 8/04089, H01M 8/04111

(54) **EFFICIENCY MODULATION IN FUEL CELL SYSTEMS**

(71) Applicant: Accelleron Switzerland Ltd., 5400 Baden (CH)
(72) Inventor: TISSOT, Jean-Francois, 68750 Bergheim (FR)
(74) Representative: Zimmermann & Partner Patentanwälte mbB

(57) **Abstract**

A fuel cell system and a method of operating a fuel cell system are described herein. The fuel cell system (100) comprises at least one fuel cell module (110), each fuel cell module (110) comprising a fuel cell (111). The fuel cell system further includes an exhaust gas manifold (130) in fluid communication with the fuel cell module (110), the exhaust gas manifold (130) being configured for receiving exhaust gas from the fuel cell module (110). The fuel cell system includes a turbocharging system (150) comprising a compressor (152) and a turbine (151) in fluid communication with the exhaust gas manifold (130); and an efficiency modulation system (160) arranged within the exhaust gas manifold (130) and upstream of the turbocharging system (150).

## Description

### TECHNICAL FIELD

Embodiments of the present disclosure relate to a fuel cell system and a method of operating a fuel cell system.

### BACKGROUND

Fuel cells have the potential to offer clean, quiet and efficient power generation. Unlike thermal energy-based engines, fuel cells use an electrochemical or battery-like process to convert chemical energy into electricity associated with the conversion of hydrogen gas into water. Fuel cell systems are used in the art for generating large electricity outputs. Fuel cell systems include several fuel cells and optionally a turbocharger or turbocharging system.

A fuel cell hybrid system converts chemical energy into both electrical and thermal energy. Generally, the best electrical efficiency is targeted, and the fuel cell hybrid system is designed to maximise the electrical efficiency. For some applications, however, it is desired to obtain a high heat power, for example for industrial process or combined heat and power (CHP) generation.

One drawback in the prior art is that fuel cell systems are not flexibly adaptable to the customer's needs. Fuel cell systems are oftentimes designed for a specific electrical output and a specific thermal output and do not allow for flexibly adapting the electrical output compared to the thermal output. For example, the customer's needs may vary over time, and at one given time a high electrical output may be desired, whereas at other times a high thermal output may be desired.

There is a continuous demand for improved fuel cell systems. In particular, there is a need for fuel cell systems which allow for generating both heat and electrical power, as well as flexibly adapting or modulating an electrical efficiency and a thermal efficiency according to a user's needs.

### SUMMARY

In light of the above, a fuel cell system according to independent claim 1 and a method of operating a fuel cell system according to independent claim 16 are provided. Further aspects, advantages, and features are apparent from the dependent claims, the description, and the accompanying drawings.

According to an aspect of the present disclosure, a fuel cell system is provided. The fuel cell system includes at least one fuel cell module, wherein each fuel cell module comprises a fuel cell. The fuel cell system further includes an exhaust gas manifold in fluid communication with the fuel cell module. The exhaust gas manifold is configured for receiving exhaust gas from the fuel cell module. The fuel cell system further includes a turbocharging system comprising a compressor and a turbine in fluid communication with the exhaust gas manifold. The fuel cell system includes an efficiency modulation system arranged within the exhaust gas manifold and upstream of the turbocharging system. The efficiency modulation system includes at least one of a first heat exchanger and an electric turbine. The efficiency modulation system further includes a first exhaust branch in fluid communication with the turbine, a second exhaust branch in fluid communication with the first heat exchanger and/or the electric turbine, and a valve system. The valve system is configured to control a proportion of exhaust gas flowing into each of the first exhaust branch and the second exhaust branch, respectively.

The efficiency modulation system may also be referred to as electrical-thermal efficiency modulation system or variable hybrid efficiency system. The efficiency modulation system has a plurality of branches, at least one of which allows for targeting a high electrical efficiency for operation of the fuel cell system and at least one of which allows for targeting a high thermal efficiency of the fuel cell system.

The first and second exhaust branch, and preferably all of the exhaust branches, are arranged in parallel, and not in series. The first exhaust branch is in fluid communication with the turbine and may allow for controlling the amount of exhaust gas that reaches the turbine of the turbocharging system. Directing a high proportion of exhaust gas flow through the first exhaust gas may allow for targeting a high electrical efficiency, for example in case the turbocharging system is an electrical turbocharging system as described in more detail below, or by increasing a compressor ratio in the compressor, thereby influencing the electrical efficiency of the fuel cell module(s).

The second exhaust branch is preferably in fluid communication with the (first) heat exchanger and allows for controlling the amount of exhaust gas that reaches the (first) heat exchanger. Controlling the exhaust gas flow through the second exhaust gas may allow for modulating a thermal efficiency of the fuel cell system. The (first) heat exchanger is preferably configured to exchange heat from the exhaust gas to an external source, such as to industrial plants or to housing. The first heat exchanger may also be referred to as high-temperature heat exchanger.

The efficiency modulation system may include other (third, fourth) exhaust gas branches as described further below. The other exhaust branches may also allow for modulating an electrical efficiency or a thermal efficiency.

The efficiency modulation system allows for flexibly adjusting or modulating the electrical and thermal efficiency of the fuel cell system according to a user's needs by controlling the proportion of exhaust gas flowing into each of the exhaust branches. In other words, the efficiency modulation system allows for flexibly varying between a system with high electrical efficiency and a system with high thermal efficiency. For example, if a high electrical output is desired, the valve system may direct a large proportion of exhaust gas or even the entire amount of gas into the first exhaust branch. If a high thermal output is desired, the valve system may direct a large proportion of exhaust gas into the second exhaust branch. Typically, the efficiency modulation system is configured to optimise or maximise the electrical efficiency unless there is a specific demand for increased thermal output.

The valve system is not particularly limited and can be any type of valve or valve system which allows for flexibly controlling the proportion of exhaust gas flowing into each exhaust branch. For example, the valve system may include a plurality of valves, and each exhaust branch may include a separate valve. Alternatively, the valve system may be arranged in a splitting portion disposed upstream of the exhaust branches and may be configured to control a proportion of exhaust gas flowing into each exhaust branch. The valve system is preferably configured to vary the proportion of exhaust individually in each exhaust branch between 0 and 100%. Stated differently, the valve system may be configured to distribute the exhaust flow among the exhaust branches.

The efficiency modulation system is preferably arranged at a downstream end of the exhaust gas manifold and may define the downstream end of the exhaust gas manifold. The efficiency modulation system may include an outflow conduit or outflow portion preferably (fluidly and/or mechanically) connected to the turbine of the turbocharging system. The outflow conduit may be directly mechanically connected to the turbine, such as to an inlet of the turbine.

Additionally, or alternatively, the efficiency modulation system may include an inflow conduit or inflow portion which is preferably (fluidly and/or mechanically) connected to the exhaust gas manifold. The inflow conduit may be directly mechanically connected to the exhaust gas manifold.

It is to be understood that the "proportion of exhaust gas" is in reference to a total amount of exhaust gas flow present in the efficiency modulation system upstream of the exhaust branches, such as in the inflow conduit.

Each of the (first, second, ...) exhaust branches may be fluidly and/or mechanically connected to the inflow conduit of the efficiency modulation system. The inflow conduit may include a splitting portion or separating portion for splitting the inflow conduit into the several exhaust branches. The splitting portion is arranged at a downstream end of the inflow conduit.

The first and second exhaust branch, and preferably also the third and fourth exhaust branch if present, may be fluidly and/or mechanically connected to the outflow conduit of the efficiency modulation system. The first and second exhaust branch, and preferably also the third and fourth exhaust branch if present, may be in fluid communication with the turbine of the turbocharging system, in particular via the outflow conduit. The outflow conduit may include a collector portion or merging portion arranged at an upstream end of the outflow conduit. The collector portion merges or joins each of the first and second exhaust branches, and optionally also the third and fourth exhaust branches if present, into the outflow conduit.

The fuel cell system preferably includes a control unit configured to control the valve system. The control unit may also control the operation of the efficiency modulation system or control the operation of the fuel cell system, including the turbocharging system, the fuel cell modules, and the other optional components described in more detail below, such as the electric turbine.

The fuel cell system preferably includes an intake manifold in fluid communication with the one or more fuel cell module(s). The intake manifold is configured to provide charged air to the fuel cell module(s). The compressor of the turbocharging system may be in fluid communication with the intake manifold.

The turbocharging system includes at least one turbine and at least one compressor. The at least one turbine of the turbocharging system is configured to receive exhaust gas from the exhaust manifold. The turbine is fluidically and mechanically connected to the exhaust manifold, preferably by means of a mechanical connection between the efficiency modulation system and the turbine. Typically, the compressor of the turbocharging system is configured to provide the intake manifold with charged air. The compressor is fluidically and mechanically connected to the intake manifold at an upstream end thereof.

The turbocharging system of the present disclosure may be a single stage turbocharging system or a multistage turbocharging system, with, for each stage, at least one turbine and at least one compressor.

According to an embodiment, the turbocharging system comprises an electric turbomachine including an electric machine configured to generate electric energy from the turbine and/or drive the compressor of the electric turbomachine. The electric machine is configured to generate electric energy from the turbine or to be operated in a power take off (PTO) mode. Additionally, the electric machine is preferably able to drive a compressor of the electric turbomachine or to be operated in a power take in (PTI) mode. The electric machine may generally be operated in a PTO, but can also be operated in a PTI mode based at certain operating points, such as during start-up, of the power system. Both the fuel cell module(s) as well as the electric machine can contribute to the total amount of electrical power produced.

The at least one electric machine can be arranged between the compressor and the turbine. Alternatively, the at least one electric machine can be arranged on the compressor side and coupled to the compressor.

The turbocharging system can be a shafted turbocharger. A "shafted turbocharger" can be understood as a turbocharger, where the compressor and the turbine are mechanically connected via a shaft. Alternatively, the turbocharging system can be a non-shafted turbocharger. A "non-shafted turbocharger" can be understood as a turbocharger, where the compressor and the turbine are not mechanically connected or mechanically coupled. In other words, in a non-shafted turbocharger, the compressor and the turbine are typically configured to operate independently and are not connected by a central shaft. Instead, the compressor and the turbine can be arranged in close proximity, e.g., within the same housing or assembly, but do not share a common shaft connecting them.

Each turbine of the turbocharging system can have a variable geometry device including a variable nozzle and/or a multi-entry, wherein at least one entry is configured to be closed, or at least partially closed. Additionally, or alternatively, each compressor of the turbocharging system can have a variable geometry device and/or a compressor bypass system including a bypass valve arranged within the bypass system.

The fuel cell system includes at least one fuel cell module, and preferably a plurality of fuel cell modules. In case several fuel cell modules are provided, each fuel cell module may be connected to the exhaust manifold and/or the intake manifold. In other words, the intake manifold may be configured to provide charged air to each of the fuel cell modules and/or be configured for receiving exhaust gas from each of the fuel cell modules.

Each fuel cell module includes one or more fuel cells or fuel cell stacks. The fuel cell is not particularly limited according to the present disclosure. Preferred fuel cells are mid-temperature and high-temperature fuel cells. Particularly preferred fuel cells are solid oxide fuel cells (SOFC), molten-carbonate fuel cells (MCFC), and protonic ceramic fuel cells (PCFC). The fuel consumed by the fuel cell system may be hydrogen, methane, natural gas, liquid natural gas, ammonia, methanol, or dimethyl ether (DME).

Each fuel cell module may include internal components other than the fuel cell, such as conduits, as well as interfaces for connecting to other components of the fuel cell system. The fuel cell module may include an intake interface connectable or connected with the intake manifold and/or an exhaust interface connectable or connected with the exhaust manifold. The efficiency modulation system is preferably arranged downstream of the exhaust interface of each fuel cell module.

Additionally, the fuel cell module may include further interfaces, such as a fuel supply interface or a water supply interface. The fuel cell modules may include internal conduits for conveying fluids within the module, such as a fuel supply line, a water supply line, an intake air supply line, and an exhaust line.

Each fuel cell module may include other internal components such as one or more of a steam generator, a pre-reformer, a reformer, a shift reactor, an afterburner and an oxidiser. The fuel cell module may also include a fuel cell heat exchanger arranged with the fuel cell module, such as within an exhaust gas line. The fuel cell heat exchanger may be configured to exchange heat within parts of the same fuel cell module.

According to an embodiment, the efficiency modulation system further includes a third exhaust branch. The valve system is configured to control a proportion of exhaust gas flowing into each of the first, second, third, exhaust branches, respectively. Additionally, the efficiency modulation system may further include a fourth exhaust branch. The valve system may be configured to control a proportion of exhaust gas flowing into each of the first, second, third, and fourth, exhaust branches, respectively. As described in more details below, the third and/or fourth exhaust branch may include further components for modulating the electrical or thermal efficiency. Alternatively, the third and/or fourth exhaust branch may initially not be provided with further components, but allow for installing further components at a later point in time. For example, if the user's requirements change after the system has been installed, the third and/or fourth exhaust branch allow for connecting further components to adapt to the user's changed requirements. The third and/or fourth exhaust branches may include interfaces or connectors for connecting further components.

According to an embodiment, the efficiency modulation system further includes an electric turbine. It is to be understood that the electric turbine is provided in addition to the turbine of the turbocharging system. The electric turbine may also be referred to as high-pressure electric turbine. The electric turbine is configured to be operated in a power take off (PTO) mode. The electric turbine can contribute to the total amount of electrical power produced by the fuel cell system. The electric turbine may be arranged in one of the exhaust branches. The valve system is configured to control a proportion of exhaust gas flowing into the electric turbine.

The electric turbine allows for expanding exhaust gases a first time such as to produce electrical power, and to obtain exhaust gas with a lower pressure and temperature. An outlet of the electric turbine may preferably be in fluid communication with an inlet of the turbine of the turbocharging system. Stated differently, the efficiency modulation system may be configured to convey the exhaust gases exiting the electric turbine to the turbine of the turbocharging system. The exhaust gas exiting the electric turbine having a lower pressure and temperature may then be expanded a second time within the turbine of the turbocharging system. This allows for operating the turbocharging system even when the exhaust enthalpy is substantially increased, which may not be possible in an energy efficient manner in case high enthalpy exhaust gas is directly expanded in the turbine of the turbocharging system, for example because of a maximum turbocharger expansion ratio, a minimum turbocharger turbine tip speed ratio, or a maximum power that can be generated by the electric machine. The valve system may be configured to convey a substantial proportion or even the entire flow of exhaust gas towards the electric turbine in case one or more of the following is fulfilled: the exhaust enthalpy is substantially increased, a high electrical efficiency is targeted, a limited compression ratio in the compressor is sufficient.

In one preferred implementation, the electric turbine is arranged within the third exhaust branch. This implementation allows for independently controlling the proportion of exhaust gas going to the first heat exchanger and the electric turbine. In another implementation, the electric turbine is arranged within the second exhaust branch, and preferably in series with the first heat exchanger. In case a higher thermal efficiency is desired, the electric turbine may be arranged downstream of the first heat exchanger. In case a higher electrical efficiency is desired, the electric turbine may be arranged upstream of the first heat exchanger.

According to an embodiment, the fuel cell system further includes a blower for providing the intake manifold with intake air. The blower is particularly beneficial for system starting. Typically, during normal operation, the blower may not be used. The blower may be electrically driven.

Additionally, or alternatively, the compressor of the turbocharging system may be configured to operate in a blowing mode. The blowing mode is particularly beneficial for system starting. A blowing mode preferably corresponds to a mode of operation in which the compressor pressure ratio is lower than 1.1. Operating the compressor in a blowing mode may also be beneficial in case the fuel cell is to be operated with a low air pressure, such as close to atmospheric pressure. The turbocharging system may include an internal bypass for bypassing exhaust gases from an inlet to an outlet of the turbine of the turbocharging system such that a compressor pressure ratio of no more than 1.1 can be realised.

In case the turbocharging system is an electric turbocharging system, the electric machine can be operated in PTI mode and the compressor can be operated in a blowing mode. In this case, the blower may be omitted.

According to an embodiment, the fuel cell system further includes a second heat exchanger. The second heat exchanger may also be referred to as low-temperature heat exchanger. The second heat exchanger is configured for exchanging heat between exhaust gas and intake air. A first fluid line of the heat exchanger for conveying intake air may be arranged downstream of an outlet of the compressor and/or upstream of the intake interfaces of the fuel cell modules. A second fluid line of the heat exchanger may be arranged downstream of an outlet of the turbine. Stated differently, the second heat exchanger may be configured to transfer heat from the exhaust gas downstream of the turbine to intake air downstream of the compressor.

In an embodiment, the exhaust gas manifold further includes a combustion chamber. The combustion chamber allows for further increasing the temperature of the exhaust gas. In particular, the combustion chamber allows for providing additional heat thereby increasing the thermal efficiency and/or to increase the electric power generated in the electric turbocharging system, thereby increasing the electrical efficiency. Typically, the combustion chamber includes a fuel inlet, and the fuel cell system may include a fuel supply connected to the fuel inlet or the fuel inlet may be connectable to a fuel supply.

In one implementation, the combustion chamber is provided upstream of the (first, second) exhaust branches. For example, the combustion chamber may be arranged upstream of the efficiency modulation system and/or downstream of the exhaust interfaces of the fuel cell modules. Alternatively, the combustion chamber is a component of the efficiency modulation system, and may be arranged in the inflow conduit of the efficiency modulation system. This implementation allows for providing each of the exhaust branches with a higher temperature exhaust gas.

In another implementation, the combustion chamber is a component of the efficiency modulation system and is arranged in one of the exhaust branches. The valve system may be configured to control a proportion of exhaust gas flowing into the combustion chamber.

Illustratively, the combustion chamber may be arranged within the second exhaust branch, preferably upstream of the first heat exchanger. This illustrative implementation allows for increasing the temperature of the exhaust gas even further before entering the first heat exchanger, which is particularly beneficial in case the external source requires an increased amount of heat.

In another illustrative implementation, the combustion chamber is arranged within the fourth exhaust branch. The fourth exhaust branch may be in fluid communication with the turbocharging system, in particular the inlet of the turbine. This illustrative implementation allows for increasing the temperature of the exhaust gas even further before expansion in the turbine, which is particularly beneficial for increasing the electric power output generated by the electric machine of the turbocharging system.

In another illustrative implementation, the combustion chamber is arranged within the same (second, third fourth) exhaust branch as the electric turbine, and upstream of the electric turbine. This illustrative implementation allows for increasing the temperature of the exhaust gas even further before expansion in the electric turbine, which is particularly beneficial for increasing the electric power output generated by the electric turbine.

According to an embodiment, the fuel cell system further includes at least one bypass fluidly connected to the efficiency modulation system. The bypass allows for decreasing the pressure of exhaust gas flowing into the turbine. Preferably, the at least one bypass fluidly connects the efficiency modulation system with an outlet of the turbine. The bypass includes a bypass valve for controlling the flow of exhaust gas through the bypass or in other words the amount of exhaust gas diverted from the turbine. The control unit may be configured to control operation of the bypass valve.

The control unit may be configured to at least partially open the bypass to reduce an exhaust gas flow to the turbocharging system. Partially opening the bypass allows for reducing the boost pressure in the turbocharging system. This in turn may reduce the electrical output in case the turbocharging system is an electric turbocharging system, and may reduce the electrical efficiency of the fuel cell module, while allowing for a higher heat generation from the fuel cell modules, which can be used to increase the thermal efficiency of the fuel cell system.

In one implementation, the bypass fluidly connects the efficiency modulation system with the second heat exchanger. A downstream end of the bypass may be connected to a conduit connecting the outlet of the turbine and the second heat exchanger. An upstream end of the bypass may be connected to one (first, second, ...) of the exhaust branches or the outflow conduit. The bypass preferably connects the efficiency modulation system downstream of the first heat exchanger with the second heat exchanger, for example the upstream end of the bypass may be connected to the collector portion.

The fuel cell system may also include a plurality of bypasses. In case several components are arranged in one exhaust branch, the efficiency modulation system may include one or more bypass(es) for bypassing these components. For example, the second exhaust branch may include the electric turbine and the first heat exchanger arranged in series. A bypass may be provided for bypassing the electric turbine and/or a bypass may be provided for bypassing the first heat exchanger. Each of the bypasses may include a separate bypass valve, and the control unit may be configured to control operation of each bypass valve.

In one embodiment, and preferably as an alternative to providing a bypass, the turbine may have a variable turbine geometry (VTG). In case a lower boost pressure in the turbocharging system is desired, the control unit may be configured to vary a stator geometry to obtain an open or large area, which allows for a low expansion ratio and a low power generation. In case a higher boost pressure in the turbocharging system is desired, the control unit may be configured to vary a stator geometry to obtain a closed or small area, which allows for a high expansion ratio and a high power generation.

In the following, several possible modes of operating the fuel cell system will be described.

In a first mode of operation, also referred to as a standard mode, the valve system may be configured to set the proportion of exhaust gas entering the first exhaust branch high, such as above 80%, above 90% or even up to 100%, while the proportion of exhaust gas entering the remaining exhaust branches is set low, such as below 20%, below 10% or even to 0%. The first mode of operation can be preferred in case a desired compression power is high in comparison to the enthalpic power of the exhaust gas, for example if any of a high air mass flow, a high air/fuel ratio, a high "Lambda", a high fuel utilization rate, or a low pre-reforming rate is desired or expected.

In a second mode of operation, the valve system may be configured to set the proportion of exhaust gas entering the electric turbine high such as above 80%, above 90% or even up to 100%. For example, the electric turbine may be arranged in the third exhaust branch, and the proportion of exhaust gas entering the third exhaust branch may be high. Alternatively, the electric turbine may be arranged in the second exhaust branch, and the proportion of exhaust gas entering the second exhaust branch may be high. Simultaneously, the proportion of exhaust gas entering the remaining exhaust branches may be set low, such as below 20%, below 10% or even to 0%. The second mode of operation allows for first expanding the exhaust gas in the electric turbine, thereby producing electrical power, and obtaining exhaust gas with a lower pressure and temperature at the inlet of the turbine of the turbocharging system. The second mode of operation is particularly beneficial in case a high electrical efficiency is targeted, an exhaust gas enthalpy is high and/or a desired compression power is limited.

In a third mode of operation, the valve system may be configured to set the proportion of exhaust gas entering the second exhaust branch high, such as above 80%, above 90% or even up to 100%, while the proportion of exhaust gas entering the remaining exhaust branches is set low, such as below 20%, below 10% or even to 0%. The third mode of operation allows for cooling down exhaust gases within the first heat exchanger thereby producing a substantial amount of thermal energy. The exhaust gas may have a pressure and temperature after exiting the first heat exchanger similar to that in the second mode of operation after expansion in the electric turbine. The third mode of operation is particularly beneficial in case a substantial amount of heat and electrical power are targeted; or in case of high enthalpy exhaust gas.

Additionally, in the third mode operation, the fuel cell system may be configured to at least partially open the bypass to reduce an exhaust gas flow to the turbocharging system. Partially opening the bypass allows for reducing the boost pressure in the turbocharging system. This in turn may reduce the electrical efficiency of the fuel cell module, and allow for a higher heat generation from the fuel cell modules, which can be used to increase the thermal efficiency of the fuel cell system.

The fuel cell system of the present disclosure may also be operated according to several other modes of operation. The efficiency modulation system allows for operating the fuel cell module so as to limit degradation as much as possible. For example, if a high degradation is to be expected for operating the turbocharging system with a given exhaust gas enthalpy, the control unit may be configured to decrease the proportion of exhaust gas entering the first exhaust branch.

According to an embodiment, the fuel cell system may include other power generators, such as an internal combustion engine or a gas turbine with a generator.

The fuel cell systems of the present disclosure may be particularly utilised in the fields of power generation, industry, especially industrial process within which both heat and electrical power are needed and need to be controlled independently, building CHP, transportation, rail vehicles and marine, especially cruise ships where high temperature heat and electrical power may be needed.

Embodiments of the present disclosure provide several advantages over prior art systems. The fuel cell system allows for several operating modes, in particular electrical efficiency-oriented operation modes as well as operating modes oriented towards high heat production.

The efficiency modulation system allows for simplifying a matching between a turbocharging system and a given fuel cell module. Different fuel cells may have different exhaust gas properties and different fuel utilisation, which may lead to different exhaust gas temperatures, especially in case an oxidiser is provided downstream of the fuel cell. The efficiency modulation system allows for altering the pressure and/or temperature of the exhaust gas before expansion in the turbine, for example by means of controlling a proportion of exhaust gas to the first heat exchanger or by means of other components. The efficiency modulation system allows for combining a given turbocharging system with a variety of different fuel cell types. The efficiency modulation system allows for combining the same turbocharging system with a wide variety of different fuel cell types.

The efficiency modulation system allows for combining a given turbocharging system with different types of fuel. For example, using a fuel cell with hydrogen can require a different air mass flow than with natural gas. The efficiency modulation system allows for altering the pressure and/or temperature of the exhaust gas before expansion in the turbine and therefore enables adaptation of a compression power or compression ratio in the compressor.

According to an aspect of the present disclosure, a method of operating a fuel cell system is provided. The fuel cell system includes a turbocharging system and an exhaust gas manifold including an efficiency modulation system arranged within the exhaust gas manifold and upstream of the turbocharging system. The efficiency modulation system includes a first heat exchanger, a first exhaust branch in fluid communication with the turbocharging system, and a second exhaust branch in fluid communication with the first heat exchanger. The efficiency modulation system may include a third exhaust branch and an electric turbine arranged within the third exhaust branch. The fuel cell system may further include a bypass fluidly connected to the efficiency modulation system. The fuel cell system may be the fuel cell system according to any embodiment described herein.

In a third mode of operation, the method includes receiving a request for increasing a thermal efficiency of the fuel cell system; reducing a proportion of exhaust gas flowing into the first exhaust branch, and increasing a proportion of exhaust gas flowing into the second exhaust branch.

The request for increasing a thermal efficiency may include a target thermal output for the fuel cell system. The method may include determining whether the step of reducing a proportion of exhaust gas flowing into the first exhaust branch is sufficient to reach the target thermal output for the fuel cell system. If this is not the case, the method may further include reducing a proportion of exhaust gas flowing into the third exhaust branch. Determining whether the step is sufficient to reach the target thermal output may include an estimation or may include measuring a thermal output, for example by means of a sensor.

The method may include estimating whether the steps of reducing a proportion of exhaust gas flowing into the first exhaust branch and reducing a proportion of exhaust gas flowing into the third exhaust branch is sufficient to reach the target thermal output for the fuel cell system. If this is not the case, the method may further include at least partially opening the bypass to reduce an exhaust gas flow to the turbocharging system. Partially opening the bypass allows for reducing the boost pressure in the turbocharging system. This in turn may reduce the electrical efficiency of the fuel cell module, and allow for a higher heat generation from the fuel cell modules, which can be used to increase the thermal efficiency of the fuel cell system.

The method may also include carrying out the first and/or second mode of operation as described above.

Those skilled in the art will recognise additional features and advantages upon reading the following detailed description, and upon viewing the accompanying drawings.

### BRIEF DESCRIPTION OF THE DRAWINGS

The components in the Figures are not necessarily to scale, instead emphasis being placed upon illustrating the principles of the invention. Moreover, in the Figures, like reference signs designate corresponding parts. The accompanying drawings relate to embodiments of the disclosure and are described in the following:
- Fig. 1: shows a schematic view of a fuel cell system according to embodiments described herein;
- Fig. 2: shows a schematic view of a fuel cell system according to embodiments described herein;
- Fig. 3: shows a schematic view of a fuel cell system according to embodiments described herein;
- Fig. 4: shows a schematic view of a fuel cell system according to embodiments described herein;
- Fig. 5: shows a schematic view of a fuel cell system according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

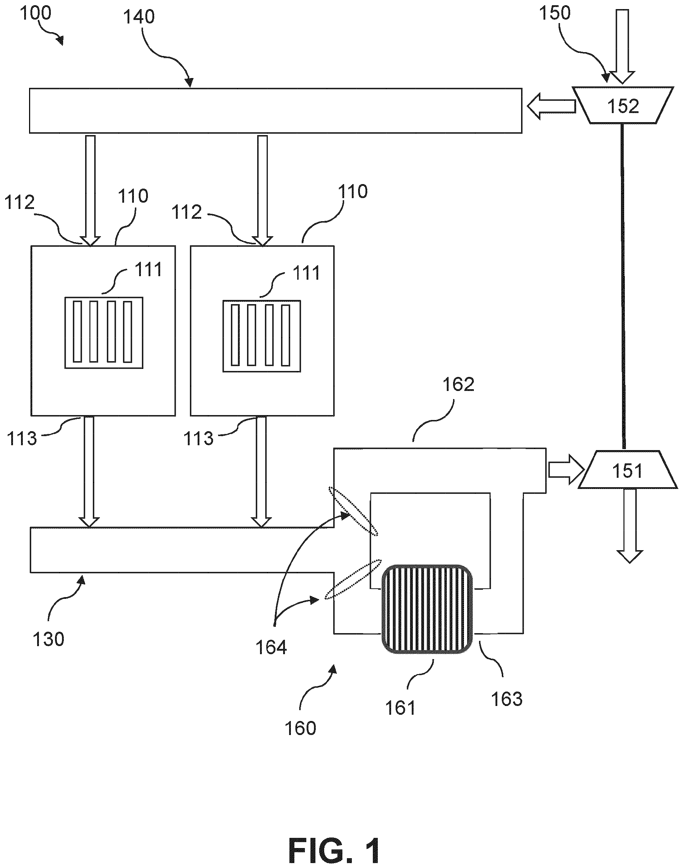

With exemplary reference to Figure 1 a fuel cell system 100 is described. The fuel cell system 100 includes two fuel cell modules 110, although the fuel cell system 100 can include any number of fuel cell modules 110, including one fuel cell module. Each fuel cell module 110 includes one or more fuel cells or fuel cell stacks 111.

The fuel cell system 100 includes a turbocharging system 150 having a compressor 152 and a turbine 151 connected to each other via a shaft. The compressor 152 is configured to provide charged air to the fuel cell modules 110. Although not shown in Figure 1, the turbocharging system 150 preferably includes an electric machine configured to generate electric energy from the turbine 151 and optionally drive the compressor 152.

The fuel cell system 100 further includes an intake manifold 140 and an exhaust manifold 130. The intake manifold 140 is connected to the compressor 152 at an upstream end of the intake manifold 140 and receives charged air from the compressor 152. A downstream portion of the intake manifold 140 is connected to the fuel cell modules 110, and in particular to an intake interface 112 of each fuel cell module 110.

An upstream portion of the exhaust manifold 130 is connected to the fuel cell modules 110, and in particular to an exhaust gas interface 113 of each fuel cell module 110. The exhaust manifold 130 is connected to the turbine 151 at a downstream end of the exhaust manifold 130. High temperature and high-pressure exhaust gas is discharged from the fuel cell modules 110 and conveyed through the exhaust manifold 130 towards the turbine 151.

The exhaust manifold 130 further includes an efficiency modulation system 160. The efficiency modulation is arranged at a downstream portion of the exhaust manifold 130 or even defines the downstream end of the exhaust manifold 130. An upstream end of the efficiency modulation system 160 may be fluidly connected to a conduit of the exhaust manifold 160 connecting to the exhaust gas interfaces 113 of the fuel cell modules 110. A fluid connection between the exhaust manifold 130 and the turbine 151 is established through the efficiency modulation system 160.

The efficiency modulation system 160 includes a conduit manifold including several branches. The efficiency modulation system 160 has an inflow conduit including a splitting portion 167, such as a bifurcation, a trifurcation etc., for splitting the exhaust gas received from the conduit of the exhaust manifold 130 to the different branches.

The efficiency modulation system 160 includes at least a first exhaust branch 162, and a second exhaust branch 163, but can additionally have any number of further exhaust branches.

The first exhaust branch 162 is in fluid communication with the turbine 151. The first exhaust branch 162 preferably does not contain any other components that influence the thermodynamic properties of the exhaust gas flowing through the first exhaust branch 162. The first exhaust branch 162 allows for conveying the exhaust gas to the turbine 151 without changing or modulating the thermodynamic properties of the exhaust gas, such as pressure and temperature.

The efficiency modulation system 160 further includes a first heat exchanger 161. The first heat exchanger 161 allows for conveying thermal energy from the exhaust gas to a further source, or in other words cooling down the exhaust gas. The further source is preferably an external source, such as an industrial plant or a residential area. The second exhaust branch 163 is in fluid communication with the first heat exchanger 161. Stated differently, the second exhaust branch 163 flows through the first heat exchanger 161. The first heat exchanger 161 and the second exhaust branch 163 allow for extracting thermal energy generated in the fuel cell system and directing the thermal energy to another application.

The efficiency modulation system 160 includes an outflow conduit 170 in fluid communication with the turbine 151. The first exhaust branch 162 is in fluid communication with the outflow conduit 170. In a preferred embodiment, the outflow conduit 170 includes a collector or merging portion 171 for joining the first and second exhaust branches 162, 163 back together. In this embodiment, the first heat exchanger 161 and the second exhaust branch 163 allow for providing exhaust gas to the turbine 151 with other thermodynamic properties than the exhaust gas provided by the first exhaust branch 162, such as lower pressure, lower temperature exhaust gas.

The efficiency modulation system 160 further includes a valve system 164. The valve system 164 is configured to control a proportion of exhaust gas flowing into each of the first exhaust branch 162 and the second exhaust branch 163, respectively. For example, the valve system 164 can direct 100% of the exhaust gas flowing through the inflow conduit into the first exhaust branch 162 or direct 100% of the exhaust gas flowing through the inflow conduit of efficiency modulation system into the second exhaust branch 163, as well as any other value in between. Controlling the proportion of exhaust gas into each exhaust branch allows for modulating or adjusting the electrical efficiency as well as the thermal efficiency of the fuel cell system 100 at any given time, depending on the desired electrical and thermal output.

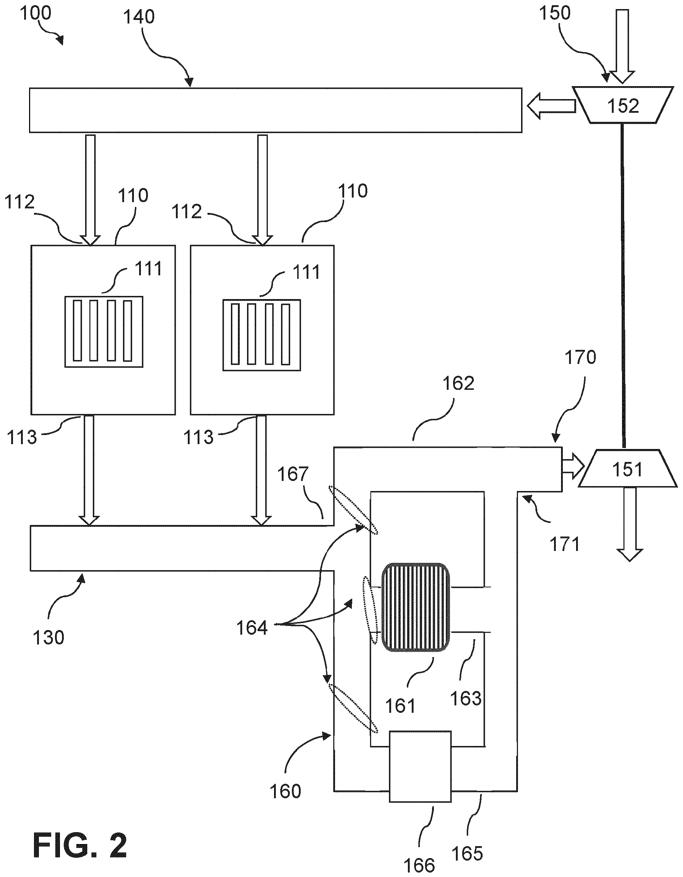

With exemplary reference to Figure 2 a fuel cell system 100 according to another embodiment is described. The embodiment illustrated in Figure 2 corresponds to that illustrated in Figure 1 unless stated to the contrary.

In this embodiment, the efficiency modulation system 160 further includes a third exhaust branch 165. The valve system 164 is configured to control a proportion of exhaust gas flowing into each of the first, second and third exhaust branches 162, 163, 165, respectively. The third exhaust branch may not contain any components or may not be attached to any other components and could be provided to connect a further component at a later point in time, for example if the user's electrical or thermal requirements change. For that purpose, the third exhaust branch 165 may include an interface for connecting a further component.

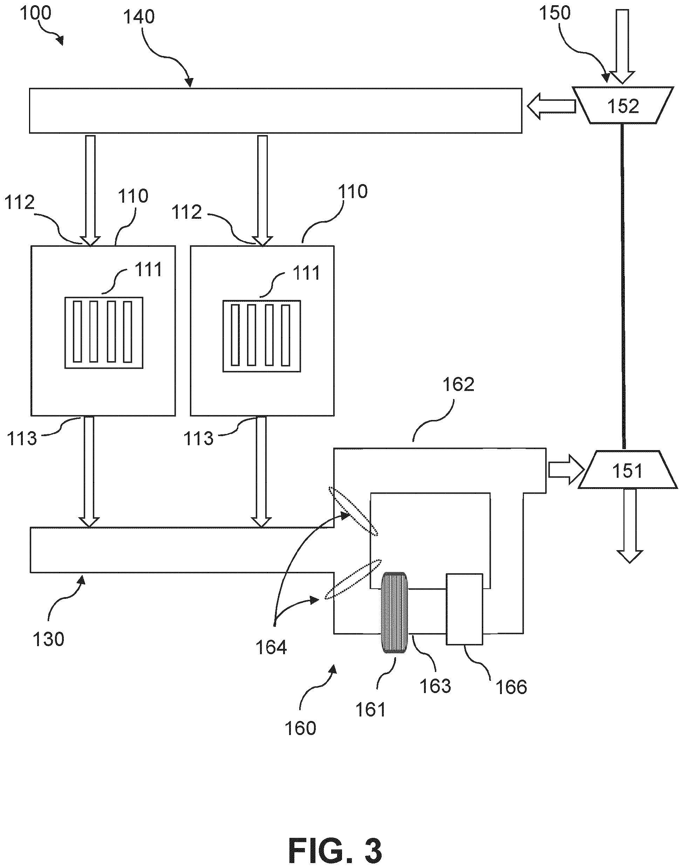

In a preferred embodiment, the efficiency modulation system 160 further includes an electric turbine 166. In the embodiment illustrated in Figure 3, the electric turbine 166 is arranged within the third exhaust branch 165.

The third exhaust branch 165 is preferably connected to the outflow conduit 170, such as joined by the collector portion 171 to the outflow conduit 170.

With exemplary reference to Figure 3 a fuel cell system 100 according to another embodiment is described. The embodiment illustrated in Figure 3 corresponds to that illustrated in Figure 1 unless stated to the contrary.

In this embodiment, the efficiency modulation system 160 also includes the electric turbine 166. However, the electric turbine 166 is arranged in the second exhaust branch 163, such as downstream of the first heat exchanger 161.

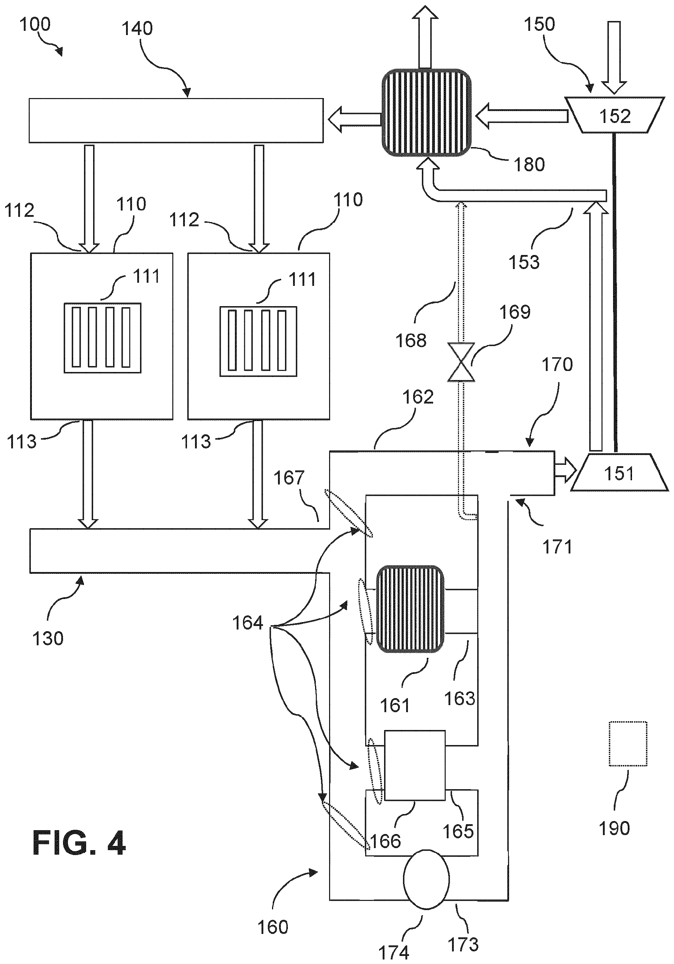

With exemplary reference to Figure 4 a fuel cell system 100 according to another embodiment is described. The embodiment illustrated in Figure 4 corresponds to that illustrated in Figure 2 unless stated to the contrary.

The fuel cell system 100 includes a control unit 190. The control unit 190 is configured to control the valve system 164, and preferably also the operation of all other components of the fuel cell system 100, such as the fuel cell modules 110, the turbocharging system 150, the electric turbine 166, as well any sensors, valves or the like.

The efficiency modulation system 160 further includes a fourth exhaust branch 173. The valve system 164 is configured to control a proportion of exhaust gas flowing into each of the first, second, third and fourth exhaust branches 162, 163, 165, 173, respectively. The fourth exhaust branch 173 is preferably connected to the outflow conduit 170, such as joined by the collector portion 171 to the outflow conduit 170.

The fourth exhaust branch may not contain any components or may not be attached to any other components and could be provided to connect a further component at a later point in time, for example if the user's electrical or thermal requirements change. For that purpose, the fourth exhaust branch 173 may include an interface for connecting a further component.

In a preferred embodiment, the efficiency modulation system 160 further includes a combustion chamber 174. In the embodiment illustrated in Figure 4, the combustion chamber 174 is arranged within the fourth exhaust branch 173. Alternatively, the combustion chamber could be arranged in the exhaust manifold 130 upstream of the efficiency modulation system 160 or in the inflow conduit of the efficiency modulation system 160, or in any other exhaust branch.

In the embodiment illustrated in Figure 4, the fuel cell system 100 further includes a second heat exchanger 180. The second heat exchanger 180 is preferably configured to exchange heat internally within the fuel cell system, and may also be referred to as an internal heat exchanger. In the embodiment illustrated in Figure 4, the second heat exchanger 180 is configured to exchange heat between the exhaust gas and intake air, particularly between exhaust gas downstream of an outlet of the turbine 151. The outlet of the turbine 151 is connected to a turbine outflow conduit 153 flowing through the second heat exchanger 180.

Additionally, or alternatively, the fuel cell system 100 may include a bypass 168 fluidly connecting the efficiency modulation system 160 with an outlet of the turbine 151. The bypass 168 includes a bypass valve 169 controllable by the control unit 190. In the embodiment illustrated in Figure 4, an upstream end of the bypass is connected to the collector portion 171. However, the bypass may be connected to any other portion of the efficiency modulation system 160, such as the inflow conduit, the outflow conduit 170, the second exhaust branch 163 or any other exhaust branch. Further, in the embodiment illustrated in Figure 4, a downstream end of the bypass 168 is connected to the turbine outflow conduit 153, in particular upstream of the second heat exchanger 180. However, the downstream end of the bypass 168 may be connected to any other portion of the fuel cell system 100 or may be an opening for discharge into the atmosphere.

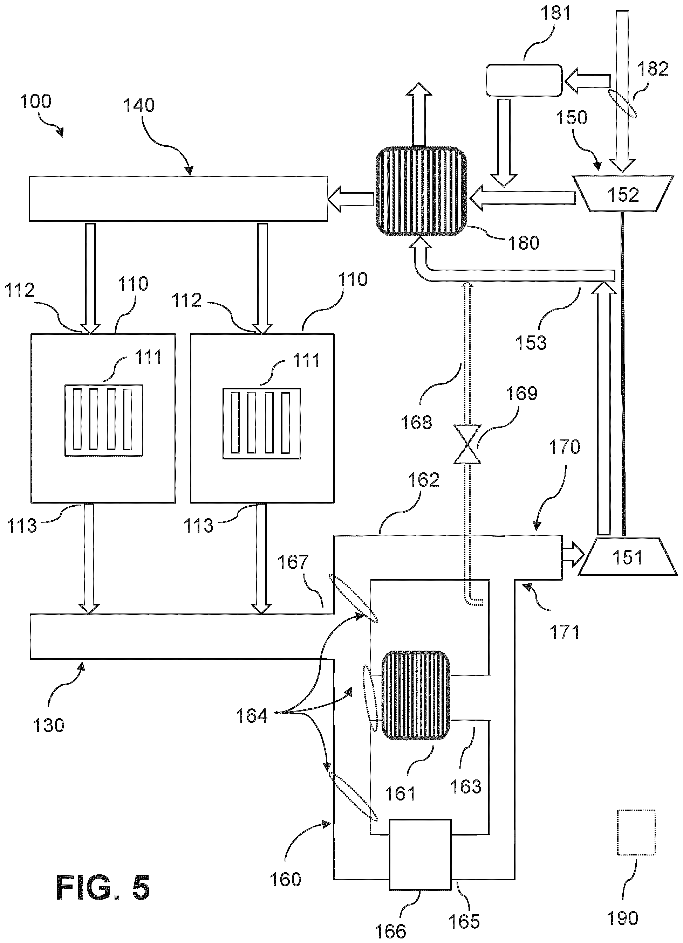

With exemplary reference to Figure 5 a fuel cell system 100 according to another embodiment is described. The embodiment illustrated in Figure 5 corresponds to that illustrated in Figure 2 and/or Figure 4 unless stated to the contrary.

The fuel cell system 100 further includes a blower 181 for providing the intake manifold 140 with intake air. The blower 181 is particularly beneficial during system starting for providing the fuel cells with air. The fuel cell system 100 may further include an inflow conduit system connected to an inlet of the compressor 152 and an inlet of the blower 181. The inflow conduit system may include an inflow valve system for controlling the flow of intake air, such as a compressor inlet valve 182 for controlling the flow of intake air to the compressor 152 and/or a blower inlet valve for controlling the flow of intake air to the blower 181.

While the foregoing is directed to embodiments, other and further embodiments may be devised without departing from the basic scope, and the scope is determined by the claims that follow.

### REFERENCE NUMERALS

- 100: fuel cell system
- 110: fuel cell module
- 111: fuel cell
- 112: intake interface
- 113: exhaust gas interface
- 130: exhaust gas manifold
- 140: intake manifold
- 150: turbocharging system
- 151: turbine
- 152: compressor
- 153: turbine outflow conduit
- 160: efficiency modulation system
- 161: first heat exchanger
- 162: first exhaust branch
- 163: second exhaust branch
- 164: valve system
- 165: third exhaust branch
- 166: electric turbine
- 167: splitting portion
- 168: bypass
- 169: bypass valve
- 170: outflow conduit
- 171: collector portion
- 173: fourth exhaust branch
- 174: combustion chamber
- 180: second heat exchanger
- 181: blower
- 182: compressor inlet valve
- 190: control unit

## Claims

1. A fuel cell system (100) comprising:
- at least one fuel cell module (110), each fuel cell module (110) comprising a fuel cell (111);
- an exhaust gas manifold (130) in fluid communication with the fuel cell module (110), the exhaust gas manifold (130) being configured for receiving exhaust gas from the fuel cell module(s) (110);
- a turbocharging system (150) comprising a compressor (152) and a turbine (151) in fluid communication with the exhaust gas manifold (130);
- an efficiency modulation system (160) arranged within the exhaust gas manifold (130) and upstream of the turbocharging system (150), wherein the efficiency modulation system (160) includes at least one of a first heat exchanger (161) and an electric turbine (166), a first exhaust branch (162) in fluid communication with the turbine (151), a second exhaust branch (163) in fluid communication with the first heat exchanger (161) and/or the electric turbine (166), and a valve system (164),
wherein the valve system (164) is configured to control a proportion of exhaust gas flowing into each of the first exhaust branch (162) and the second exhaust branch (163), respectively.

2. The fuel cell system (100) of claim 1, wherein the turbocharging system (150) comprises an electric turbomachine including an electric machine configured to generate electric energy from the turbine (151) and/or drive the compressor (152) of the electric turbomachine.

3. The fuel cell system (100) of any preceding claim, wherein the efficiency modulation system (160) further includes a third exhaust branch (165), and optionally a fourth exhaust branch (173), and wherein the valve system is configured to control a proportion of exhaust gas flowing into each of the first, second, third, and optionally fourth, exhaust branches (162, 163, 165), respectively.

4. The fuel cell system (100) of any preceding claim, wherein the efficiency modulation system (160) further includes the first heat exchanger (161) and the electric turbine (166), and wherein the valve system (164) is configured to control a proportion of exhaust gas flowing into the electric turbine (166).

5. The fuel cell system (100) of claim 4, wherein the electric turbine (166) is arranged within the second exhaust branch (163); or wherein the electric turbine (166) is arranged within the third exhaust branch (165).

6. The fuel cell system (100) of any preceding claim, wherein the exhaust gas manifold (130) further includes a combustion chamber (174).

7. The fuel cell system (100) of claim 6, wherein the efficiency modulation system (160) includes the combustion chamber (174) and wherein the valve system (164) is configured to control a proportion of exhaust gas flowing into the combustion chamber (174); optionally wherein the combustion chamber (174) is arranged within the second exhaust branch (163), preferably upstream of the first heat exchanger (161); or is arranged within the fourth exhaust branch (173).

8. The fuel cell system (100) of any preceding claim, wherein the efficiency modulation system (160) further includes an outflow conduit (170) having a collector portion (171) at an upstream end of the outflow conduit (170), wherein the collector portion (171) joins each of the first and second, and optionally the third, and optionally the fourth, exhaust branches into the outflow conduit (170).

9. The fuel cell system (100) of any preceding claim, further including:
- an intake manifold (140) in fluid communication with the fuel cell module (110), the intake manifold (140) being configured to provide charged air to the fuel cell module (110); wherein the compressor (152) is in fluid communication with the intake manifold (140); and
- a second heat exchanger (180) configured for exchanging heat between exhaust gas and intake air.

10. The fuel cell system (100) of claim 9, wherein the second heat exchanger (180) is configured to transfer heat from the exhaust gas downstream of the turbine (151) to intake air downstream of the compressor (152).

11. The fuel cell system (100) of any preceding claim, further including a bypass (168) fluidly connecting the efficiency modulation system (160) with an outlet of the turbine (151).

12. The fuel cell system (100) of claim 11, wherein the bypass (168) fluidly connects the efficiency modulation system (160) with the second heat exchanger (180), in particular wherein the bypass (168) fluidly connects the efficiency modulation system (160) downstream of the first heat exchanger (161) with the second heat exchanger (180).

13. The fuel cell system (100) of any preceding claim, further including a blower (181) for providing the intake manifold with intake air, in particular for system starting.

14. The fuel cell system (100) of any one of claims 1 to 12, wherein the compressor (152) is configured to operate in a blowing mode, in particular for system starting.

15. The fuel cell system (100) of any preceding claim, wherein the efficiency modulation system (160) is configured to modulate an electrical efficiency or a thermal efficiency by means of controlling the valve system (164); and optionally the bypass.

16. A method of operating a fuel cell system, the fuel cell system (100) comprising a turbocharging system (150) and an exhaust gas manifold (130) including an efficiency modulation system (160) arranged within the exhaust gas manifold (130) and upstream of the turbocharging system (150), wherein the efficiency modulation system (160) includes a first heat exchanger (161), a first exhaust branch (162) in fluid communication with the turbocharging system (150), and a second exhaust branch (163) in fluid communication with the first heat exchanger (161), optionally wherein the efficiency modulation system (160) further includes a third exhaust branch (165) and an electric turbine (166) arranged within the third exhaust branch (165); the method comprising:
Receiving a request for increasing a thermal efficiency of the fuel cell system;
Reducing a proportion of exhaust gas flowing into the first exhaust branch, and increasing a proportion of exhaust gas flowing into the second exhaust branch; and optionally reducing a proportion of exhaust gas flowing into the third exhaust branch; and
Further optionally wherein the fuel cell system (100) includes a bypass (168) fluidly connected to the efficiency modulation system (160); and the method includes at least partially opening the bypass to reduce an exhaust gas flow to the turbocharging system (150).
